(19) Europäisches Patentamt
European Patent Office
Office européen des brevets

(11) EP 2 595 841 B1

(12) EUROPÄISCHE PATENTSCHRIFT

(45) Veröffentlichungstag und Bekanntmachung des Hinweises auf die Patenterteilung:
**04.06.2014 Patentblatt 2014/23**

(21) Anmeldenummer: **11736340.8**

(22) Anmeldetag: **20.07.2011**

(51) Int Cl.:
***C08F 283/00*** (2006.01) ***B60R 13/08*** (2006.01)
***B61D 17/18*** (2006.01) ***F16F 7/00*** (2006.01)
***G10K 11/16*** (2006.01) ***G10K 11/162*** (2006.01)
***G10K 15/00*** (2006.01) ***C08F 2/20*** (2006.01)
***C08F 2/22*** (2006.01) ***C08F 220/10*** (2006.01)
***C08K 3/00*** (2006.01)

(86) Internationale Anmeldenummer:
**PCT/EP2011/062450**

(87) Internationale Veröffentlichungsnummer:
**WO 2012/010632 (26.01.2012 Gazette 2012/04)**

(54) **ANTIDRÖHNMASSE MIT DURCH SCHUTZKOLLOID STABILISIERTEM EMULSIONSPOLYMERISAT**

ANTI-DRUMMING COMPOUND COMPRISING EMULSION POLYMER STABILIZED BY PROTECTIVE COLLOID

MATIÈRE ANTIBRUIT COMPRENANT UN POLYMÈRE EN ÉMULSION STABILISÉ PAR UN COLLOÏDE PROTECTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.07.2010 EP 10170428**

(43) Veröffentlichungstag der Anmeldung:
**29.05.2013 Patentblatt 2013/22**

(73) Patentinhaber: **BASF SE**
**67056 Ludwigshafen (DE)**

(72) Erfinder:
- **FONSECA, Gledison**
**68161 Mannheim (DE)**
- **WULFF, Dirk**
**67105 Schifferstadt (DE)**
- **WEISS, Axel**
**67346 Speyer (DE)**
- **HERRERA TABOADA, Lidcay**
**E-08008 Barcelona (ES)**
- **SIROKY, Jürgen**
**68229 Mannheim (DE)**

(56) Entgegenhaltungen:
**WO-A1-2006/069689**
**JP-A- 2008 133 357**
**US-A1- 2009 286 933**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 595 841 B1

## Beschreibung

Die Erfindung betrifft die Verwendung einer Polymerdispersion zur Herstellung von Antidröhnmassen, wobei die Polymerdispersion erhältlich ist durch Emulsionspolymerisation von radikalisch polymerisierbaren Monomeren in Gegenwart mindestens eines Schutzkolloids, welches ein amphiphiles Pfropfcopolymer ist. Die Erfindung betrifft auch entsprechende Antidröhnmassen, welche die Polymerdispersion enthalten sowie ein Verfahren zur Dämpfung von Vibrationen oder Schwingungen von Bauteilen von Fahrzeugen.

Durch Vibration oder Schwingungen von Bauteilen von Maschinen oder Fahrzeugen werden unerwünschte Geräusche erzeugt. Zur Geräuschminderung können die Bauteile mit sogenannten Antidröhnmassen, auch LASD-Massen (Liquid Applied Sound Damping) genannt, versehen werden. Schwingungsdämpfende Materialien sind beispielsweise beschrieben in Journal of Materials Science 36 (2001) 5733-5737, US 2004/0033354 und US 6502821. Die Ausrüstung von geometrisch komplexen, dreidimensionalen Bauteilen kann durch Aufsprühen einer Antidröhnmasse in Form einer wässrigen Dispersion erfolgen. Derartige Dispersionen enthalten in der Regel ein dispergiertes, viskoelastisches Polymer und anorganische Füllstoffe. Schwingungsdämpfende Zusammensetzung auf Basis von wasserbasierten Polymerdispersionen und anorganischen Füllstoffen sowie weiterer Hilfsstoffe sind bekannt aus der EP 1520865 und der WO 2007/034933. Die Güte einer Antidröhnmasse kann durch Messung der Biegeschwingungen im Resonanzkurvenverfahren nach ISO 6721-1 und ISO 6721-3 gemessen werden. Ein Maß für die schwingungsdämpfende Wirkung ist der Verlustfaktor tan delta. Bei der Verwendung von Antidröhnmassen auf Basis von viskoelastischen Polymeren ist der Verlustfaktor temperaturabhängig. Es werden Materialien gewünscht, die zu einem möglichst großen Verlustfaktor in dem Temperaturbereich führen, in welchem die Maschinen oder Fahrzeuge üblicherweise betrieben werden, z.B. zwischen 0 und 40 °C. Aufgabe der vorliegenden Erfindung war es, weitere Materialien zur Verfügung zu stellen mit guten oder verbesserten schwingungsdämpfenden Eigenschaften.

Es wurde gefunden, dass die in bekannten Antidröhnmasssen auf Basis von Polymerdispersionen zur Stabilisierung der Polymere enthaltenen Emulgatoren sich nachteilig auf die schwingungsdämpfenden Eigenschaften auswirken können und dass die Wirksamkeit der Antidröhnmassen gesteigert werden kann, wenn zur Stabilisierung der Polymere in der wässrigen Dispersion bestimmte Schutzkolloide eingesetzt werden.

Gegenstand der Erfindung ist daher die Verwendung einer Polymerdispersion zur Herstellung von Antidröhnmassen, wobei die Polymerdispersion erhältlich ist durch Emulsionspolymerisation von radikalisch polymerisierbaren Monomeren in Gegenwart mindestens eines Schutzkolloids, welches ein amphiphiles Pfropfcopolymer ist. Eine bevorzugte Verwendung ist die Verwendung der erfindungsgemäßen Antidröhnmasse zur Schwingungsdämpfung von Karosserieteilen eines Fahrzeugs.

Gegenstand der Erfindung ist auch eine Antidröhnmasse, enthaltend

(a) eine Polymerdispersion, enthaltend mindestens ein durch Emulsionspolymerisation von radikalisch polymerisierbaren Monomeren erhältliches, in Wasser dispergiertes Polymer und mindestens ein Schutzkolloid, welches ein amphiphiles Pfropfcopolymer ist; und
(b) anorganische Füllstoffe.

Ein amphiphiles Copolymer ist ein Polymer, welches sowohl hydrophile Bereiche als auch hydrophobe Bereiche enthält. Hydrophile Bereiche sind polymere Bereiche, bei denen die zugrunde liegenden hydrophilen monomeren Einheiten eine größere Wasserlöslichkeit aufweisen als die den hydrophoben Bereichen zugrunde liegenden hydrophoben monomeren Einheiten. Ein Pfropfcopolymer ist ein Polymer mit einer Hauptkette mit mindestens einer, vorzugsweise mehreren darauf gepfropften Seitenketten. Der durchschnittliche Pfropfungsgrad des Pfropfcopolymers ist vorzugsweise mindestens 0,05, insbesondere mindestens 0,1 Pfropfungsstellen pro 50 monomeren Einheiten der Hauptkette. Schutzkolloide sind polymere Verbindungen, die bei Solvatation große Mengen Wasser binden und in der Lage sind, Dispersionen von wasserunlöslichen Polymeren zu stabilisieren. Die Schutzkolloide werden vorzugsweise in einer Menge von 0,5 bis 60 Gew.-Teilen oder von 1 bis 30 Gew.-Teilen, besonders bevorzugt von 7 bis 30 Gew.% (insbesondere wenn der Gesamtfeststoffgehalt der erfindungsgemäßen Zusammensetzung mehr als 50 Gew.% beträgt), bezogen auf 100 Gew.-Teile der zu polymerisierenden Monomeren verwendet.

Bevorzugte Pfropfcopolymere weisen eine Hauptkette mit wasserlöslichen Polyalkylenoxideinheiten und Seitenketten mit Polyvinylestereinheiten auf. Polyalkylenoxideinheiten sind z.B. Polyethylenoxid, Polypropylenoxid oder deren Gemisch, insbesondere Ethylenoxid/Propylenoxid-Blockcopolymere. Besonders bevorzugt ist Polyethylenoxid. Vinylester sind z.B. Vinylacetat und Vinylpropionat. Besonders bevorzugt ist Vinylacetat. Ein bevorzugtes amphiphiles Schutzkolloid weist eine Hauptkette mit Polyethylenoxideinheiten und Seitenketten mit Polyvinylacetateinheiten auf. Geeignete Pfropfcopolymere auf Basis von Polyalkylenoxiden und Vinylestern und deren Herstellung sind beschrieben in WO 2007/138053, DE 1077430 und GB 922457.

Das gewichtsmittlere Molekulargewicht Mw der Pfrofpcopoylmere ist vorzugsweise von 500 bis 100000, insbesondere von 1000 bis 60000 oder von 1500 bis 20000.

Bevorzugte amphiphile Pfropfcopolymere haben von 10 bis 50 Gew.%, vorzugsweise von 20 bis 45 Gew.% oder von 30 bis 40 Gew.% wasserlösliche Polyalkylenoxide, vorzugsweise Polyethylenoxid, als Hauptkette und 50 bis 90 Gew.%, vorzugsweise von 55 bis 80 Gew.% oder von 60 bis 70 Gew.% durch radikalische Polymerisation gebildete Seitenketten, wobei die Seitenketten vorzugsweise zu 70 bis 100 Gew.% aus Vinylacetat, Vinylpropionat oder deren Gemisch und zu 0 bis 30 Gew.% aus weiteren, davon verschiedenen, ethylenisch ungesättigten Monomeren gebildet sind. Vorzugsweise beträgt das Gewichtsverhältnis von Polyalkylenoxideinheiten zu Vinylestereinheiten mindestens 20/80 oder mindestens 30/70 und vorzugsweise bis zu 80/20, bis zu 40/60, bis zu 50/50 oder bis zu 45/55.

In einer Ausführungsform weist das amphiphile Schutzkolloid

(A) von 10 bis 50 Gew.%, bezogen auf das Gesamtpolymer, an wasserlöslichen Polyalkylenoxiden als Hauptkette und
(B) von 50 bis 90 Gew.%, bezogen auf das Gesamtpolymer, an Seitenketten auf,

wobei die Seitenketten gebildet sind durch radikalische Polymerisation von

(B1) 70 bis 100 Gew. %, bezogen die Seitenketten, an Vinylestern, ausgewählt aus Vinylacetat, Vinylpropionat und deren Gemisch und
(B2) 0 bis 30 Gew.%, bezogen die Seitenketten, an weiteren, ethylenisch ungesättigten, radikalisch polymerisierbaren Monomeren.

Geeignete wasserlösliche Polyalkylenoxide sind insbesondere C2-C4-Alkylenoxide, die mindestens 50 Gew.%, vorzugsweise mindestens 60 Gew.%, mindestens 75 Gew.% oder 100 Gew.% Ethylenoxid in polymerisierter Form enthalten. Die Polyalkylenoxidhauptkette kann OH-Endgruppen oder eine oder zwei Etherendgruppen, z.B. C1-C25-Alkyl-, Phenyl- oder C1-C14Alkylphenylether aufweisen.

Als Hauptkette geeignete wasserlösliche Polyalkylenoxide sind z.B. Polyethylenglykol mit einem zahlenmittleren Molekulargewicht Mn von vorzugsweise 1500 bis 20000 oder 2500 bis 15000, wobei keine, eine oder beide der Endgruppen C1 bis C25-Alkylgruppen sein können; Copolymere von Ethylenoxid, Propylenoxid und/oder Butylenoxid mit einem Gehalt an Ethylenoxid von mindestens 50 Gew.% mit einem zahlenmittleren Molekulargewicht Mn von vorzugsweise 1500 bis 20000 oder 2500 bis 15000, wobei keine, eine oder beide der Endgruppen C1 bis C25-Alkylgruppen sein können; Polyester oder Polyurethane mit einem zahlenmittleren Molekulargewicht Mn von vorzugsweise 2500 bis 20000, gebildet aus C2-C12-Dicarbonsäuren bzw. C6-C18-Diisocyanaten und Polyalkylenkykolen mit einem zahlenmittleren Molekulargewicht Mn von vorzugsweise 200 bis 5000, wobei die Polyalkylenglykole ausgewählt sind aus Polyethylenglykol und Copolymeren von Ethylenoxid, Propylenoxid und/oder Butylenoxid mit einem Gehalt an Ethylenoxid von mindestens 50 Gew.%. Besonders bevorzugt ist Polyethylenglykol.

Die Seitenketten sind vorzugsweise gebildet durch Polymerisation von Vinylestern in Gegenwart der Polyalkylyenoxide. Geeignete Vinylester sind Vinylacetat, Vinylpropionat und deren Gemisch. Bevorzugt ist Vinylacetat. Die Seitenketten können aber auch gebildet sein durch Copolymerisation von Vinylacetat und/oder Vinylpropionat und mindestens einem weiteren, davon verschiedenen, ethylenisch ungesättigtem Comonomer. Der Anteil der weiteren Comonomere ist vorzugsweise von 0 bis 30 Gew.%, z.B. von 0,5 bis 25 Gew.%, bezogen auf die Summe der zur Seitenkettenbildung eingesetzten Monomere oder von 0 bis 24 Gew. %, z. B. von 0,4 bis 20 Gew.%, von 1 bis 15 Gew.% oder von 2 bis 10 Gew.%, bezogen auf das Pfropfcopolymer.

Im Folgenden wird die Bezeichnung "(Meth)acryl..." und ähnliche Bezeichnungen als abkürzende Schreibweise verwendet für "Acryl... oder Methacryl...".

Als weitere Comonomere geeignet sind z.B. monoethylenisch ungesättigte Mono- und Dicarbonsäuren und deren Derivate sowie Styrol. Geeignete Säurederivate sind z.B. Ester, Amide und Anhydride. Diese weiteren Comonmere können einzeln oder im Gemisch eingesetzt werden. Spezifische Beispiele sind: (Meth)acrylsäure, C1-C12-(Meth)acrylate, C2-C12-Hydroxyalkyl-(meth)acrylate, (Meth)acrylamid, N-C1-C12-Alkyl-(meth)acrylamid" N,N-Di(C1-C12-alkyl)-(meth)acrylamid, Maleinsäure, Maleinsäureanhydrid und mono-C1-C12-Alkylester der Maleinsäure. Bevorzugte weitere Comonomere sind C1-C8-Alkyl(meth)acrylate und Hydroxyethylacrylat, insbesondere C1-C4-Alkyl(meth)acrylate.. Besonders bevorzugt sind Methylacrylat, Ethylacrylat und n-Butylacrylat.

Bei den erfindungsgemäßen Polymerdispersionen handelt es sich um Dispersionen von Polymeren in wässrigem Medium. Hierbei kann es sich z.B. ausschließlich um Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%, insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen

140 und 250 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Der pH-Wert der Polymerdispersion wird vorzugsweise auf pH größer 4 insbesondere auf einen pH-Wert zwischen 5 und 9 eingestellt.

Vorzugsweise sind die erfindungsgemäßen Polymerdispersionen emulgatorarm, d.h. sie enthalten Emulgatoren (der Polymerisationsmischung zugesetzte, nicht-polymere, amphiphile, oberflächenaktive Substanzen) in einer Menge von vorzugsweise weniger als 3 oder weniger als 1 Gew.%. Besonders bevorzugt sind emulgatorfreie Systeme. In einer Ausführungsform der Erfindung erfolgt daher die in Gegenwart des Schutzkolloids durchgeführte Emulsionspolymerisation emulgatorfrei, d.h. ohne Zusatz von Emulgatoren.

Bei den durch Emulsionspolymerisation hergestellten Polymeren handelt es sich um Polymere, die durch radikalische Polymerisation von ethylenisch ungesättigten Verbindungen (Monomeren) erhältlich sind. Das Polymer besteht vorzugsweise zu mindestens 40 Gew.% oder zu mindestens 60 Gew. %, oder zu mindestens 80 Gew. %, besonders bevorzugt zu mindestens 90 Gew.% oder zu 100 Gew.% aus einem oder mehreren der nachfolgend beschriebenen Hauptmonomeren. Die Hauptmonomeren sind vorzugsweise ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

Art und Menge der Monomeren sind vorzugsweise derart, dass die Glasübergangstemperatur des durch Emulsionspolymerisation hergestellten Polymers im Bereich von -60 °C bis kleiner oder gleich 70 °C oder im Bereich von -30 °C bis kleiner oder gleich 60 °C liegt, besonders bevorzugt im Bereich von -15 bis 50°C. Die Glasübergangstemperatur lässt sich bestimmen durch Differential Scanning Calorimetrie (ASTM D 3418-08, sog. "midpoint temperature").

Geeignete Monomere sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind z.B. Butadien, Isopren und Chloropren.

Als Hauptmonomere bevorzugt sind $C_1$- bis $C_{10}$-Alkylacrylate und $C_1$- bis $C_{10}$-Alkylmethacrylate, insbesondere $C_1$- bis $C_8$-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Hexylacrylat, Octylacrylat und 2-Ethylhexylacrylat, 2-Propylheptylacrylat, Styrol sowie Mischungen dieser Monomere. Insbesondere sind die Polymere zu mindestens 60 Gew.%, besonders bevorzugt zu mindestens 80 Gew.% und ganz besonders bevorzugt zu mindestens 90 oder zu mindestens 95 Gew.% aus $C_1$ bis $C_{10}$ Alkyl(meth)acrylaten aufgebaut.

Neben den Hauptmonomeren kann das Polymer weitere Monomere enthalten, z.B. ethylenisch ungesättigte Monomere mit Carbonsäure-, Sulfonsäure- oder Phosphonsäuregruppen (Säuremonomere). Bevorzugt sind Carbonsäuregruppen. Genannt seien z. B. Acrylsäure, Methacrylsäure, Itaconsäure, Maleinsäure oder Fumarsäure. Vorzugsweise ist das durch Emulsionspolymerisation hergestellte Polymer aber frei von Säuregruppen.

Weitere Monomere sind z.B. auch Hydroxylgruppen enthaltende Monomere, insbesondere $C_1$-$C_{10}$-Hydroxyalkyl(meth)acrylate oder (Meth)acrylamid. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. Als weitere Monomere seien auch vernetzende Monomere genannt.

Insbesondere ist das Polymer zu mindestens 60 Gew.-%, besonders bevorzugt zu mindestens 80 Gew.-%, z.B. von 60 bis 100 Gew.%, und ganz besonders bevorzugt zu mindestens 95 Gew.-% oder zu 100 Gew.% aus mindestens einem $C_1$ bis $C_{20}$ Alkylacrylat, mindestens einem $C_1$ bis $C_{20}$ Alkylmethacrylat, deren Gemisch oder deren Gemisch mit Styrol aufgebaut.

Die Herstellung der Polymere erfolgt durch Emulsionspolymerisation, es handelt sich somit um ein Emulsionspolymerisat. Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Erfindungsgemäß können ein oder mehrere der oben genannten Schutzkolloide als einziges Dispergiermittel eingesetzt werden, d.h. ohne einen Zusatz von Emulgatoren. Falls gewünscht, können aber auch geringe Mengen an Emulgatoren mitverwendet werden. Vorzugsweise erfolgt die Emulsionspolymerisation in Gegenwart mindestens eines Schutzkolloids ohne Zusatz eines nicht-polymeren Emulgators.

Falls Emulgatoren als zusätzliche grenzflächenaktive Substanzen eingesetzt werden, so handelt es sich vorzugsweise um anionische oder nichtionische Emulgatoren. Geeignete Emulgatoren sind beispielsweise ethoxylierte $C_8$- bis $C_{36}$- oder $C_{12}$- bis $C_{18}$-Fettalkohole mit einem Ethoxylierungsgrad von 3 bis 50 oder von 4 bis 30, ethoxylierte Mono-, Di- und Tri- $C_4$- bis $C_{12}$- oder $C_4$- bis $C_9$-Alkylphenole mit einem Ethoxylierungsgrad von 3 bis 50, Alkalimetallsalze von Dialkylestern der Sulfobernsteinsäure, Alkalimetall- und Ammoniumsalze von $C_8$- bis $C_{12}$-Alkylsulfaten, Alkalimetall- und Ammoniumsalze von $C_{12}$- bis $C_{18}$-Alkylsulfonsäuren und Alkalimetall- und Ammoniumsalze von $C_9$- bis $C_{18}$-Alkylarylsulfonsäuren. Kationaktive Emulgatoren sind z.B. Verbindungen mit mindestens einer Amino- oder Ammoniumgruppe und mindestens einer C8-C22-Alkylgruppe. Weitere geeignete Emulgatoren sind Verbindungen der allgemeinen Formel

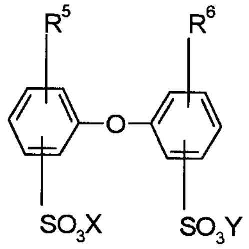

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax®2A1 (Warenzeichen der Dow Chemical Company). Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z. B. Dowfax®2 A1, Emulan® NP 50, Dextrol®OC 50, Emulgator 825, Emulgator 825 S, Emulan®OG, Texapon® NSO, Nekanil® 904 S, Lumiten® I-RA, Lumiten® E 3065, Disponil® FES 77, Lutensol® AT 18, Steinapol® VSL, Emulphor® NPS 25. Geeignet sind auch copolymerisierbare Emulgatoren, welche eine radikalisch polymerisierbare, ethylenisch ungesättigte Doppelbindung enthalten, z.B. reaktive anionische Emulgatoren wie Adeka® Resoap SR-10.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden.

Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Emulsionspolymerisation wird in Gegenwart mindestens eines Schutzkolloids durchgeführt. Das bedeutet, dass die Schutzkolloide vorgelegt oder zusammen mit Monomeren dem Polymerisationsgefäß zugeführt werden. Sie werden vorzugsweise bei der Emulsionspolymerisation vorgelegt, während gegebenenfalls zusätzlich eingesetzte Emulgatoren zusammen mit den Monomeren auch im Laufe der Polymerisation zugeführt werden können.

Bei der Emulsionspolymerisation können die üblichen und bekannten Hilfsstoffe, wie z.B. wasserlösliche Initiatoren und Regler eingesetzt werden. Wasserlösliche Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme

können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden. Zur Entfernung der Restmonomeren wird üblicherweise auch nach dem Ende der eigentlichen Emulsionspolymerisation Initiator zugesetzt.

Bei der Polymerisation können Molekulargewichtsregler eingesetzt werden, z. B. in Mengen von 0 bis 0,8 Gew.-Teile, bezogen auf 100 Gew.-Teile der zu polymerisierenden Monomeren, wodurch die Molmasse verringert wird. Geeignet sind z. B. Verbindungen mit einer Thiolgruppe wie tert.-Butylmercaptan, Thioglycolsäureester, z.B. 2-Ethylhexylthioglycolat, Mercaptoethanol, Mercaptopropyltrimethoxysilan, n-Dodecylmercaptan oder tert.-Dodecylmercaptan. Weiterhin können Regler ohne Thiolgruppe verwendet werden, wie z.B. C6- bis C20-Kohlenwasserstoffe, welche bei Wasserstoffabstraktion ein Pentadienylradikal bilden, z.B. Terpinolen. In einer bevorzugten Ausführungsform ist das Emulsionspolymerisat hergestellt unter Verwendung von 0,05 bis 0,5 Gew.%, bezogen auf die Monomermenge, an mindestens einem Molekulargewichtsregler.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

In einer bevorzugten Ausführungsform weist das Polymer eine Kern-Schale Morphologie auf oder ist durch mindestens zweistufige Polymerisation herstellbar, wobei die Glasübergangstemperatur des den Kern bildenden Polymers (A) um mindestens 10°C, vorzugsweise um mindestens 15°C oder mindestens 20 °C, z.B. um 10 bis 50°C verschieden ist von der Glasübergangstemperatur des die Schale bildenden Polymers (B), bzw. wobei die Glasübergangstemperatur des bei der ersten Polymerisationsstufe entstehenden Polymers (B) von der Glasübergangstemperatur des bei der zweiten Polymerisationsstufe (A) entstehenden Polymers um mindestens 10°C, vorzugsweise um mindestens 15°C oder mindestens 20 °C, z.B. um 10 bis 50°C verschieden ist. Diese Ausführungsform betrifft also wässrige Polymerdispersionen, worin die Polymerteilchen mindestens zwei voneinander verschiedene Polymerphasen (A) und (B) mit unterschiedlichen Glasübergangstemperaturen aufweisen. Dies hat den Vorteil, dass damit hergestellte Antidröhnmassen in einem größeren Temperaturbereich schwingungsdämpfende Wirkungen besitzen. Vorzugsweise ist die Glasübergangstemperatur des Kerns größer als die Glasübergangstemperatur der Schale.

Bei den Kern-Schale-Partikeln ist die Oberfläche des Kerns ganz oder mindestens teilweise mit den die Schale bildenden Polymeren bedeckt. Kern-Schale-Partikel haben vorzugsweise einen durchschnittlichen Teilchendurchmesser von 10 nm bis 1 Mikrometer oder von 20 nm bis 500 nm, messbar mit einem dynamischen Lichtstreuungsphotometer. Sowohl bei Polymer (A) als auch bei dem davon verschiedenen Polymer (B) handelt es sich vorzugsweise um Acrylatcopolymere, wobei Art und Menge der Monomeren so sind, dass die Mindestdifferenz der Glasübergangstemperaturen gewährleistet ist. Geeignete Acrylatcopolymere zur Bildung von mindestens zweiphasigen Polymerteilchen sind z.B. beschrieben in WO 2007/034933, EP 1520865 und DE19954619.

Polymerdispersionen mit mindestens zweiphasigen Polymerteilchen sind vorzugsweise erhältlich durch radikalische wässrige Emulsionspolymerisation umfassend die folgenden Schritte:

a) Polymerisation einer ersten Monomercharge M1 zu einem Polymer P1 mit einer theoretischen Glasübergangstemperatur Tg(1) (nach Fox) und

b) Polymerisation einer zweiten Monomercharge M2 zu einem Polymer P2 mit einer von Tg(1) verschiedenen, theoretischen Glasübergangstemperatur Tg(2) (nach Fox) in der wässrigen Dispersion des Polymeren P1,

wobei vorzugsweise entweder bei der Polymerisation der Monomercharge M1 oder bei der Polymerisation der Monomercharge M2 wenigstens ein Kettenübertragungsreagenz eingesetzt wird.

Unter einer theoretischen Glasübergangstemperatur versteht man hier und im folgenden die nach Fox aufgrund

der Monomerzusammensetzung der Monomercharge M1 bzw. der Monomercharge M2 berechnete Glasübergangstemperatur Tg(1) bzw. Tg(2). Nach Fox (T.G. Fox, Bull. Am. Phys. Soc. (Ser. II) 1, 123 [1956] und Ullmann's Enzyklopädie der technischen Chemie, Weinheim (1980), S. 17, 18) gilt für die Glasübergangstemperatur von Mischpolymerisaten bei großen Molmassen in guter Näherung

$$1/Tg = x1/Tg(1) + x2/Tg(2) + ... + xn/Tg(n)$$

wobei x1, x2, ... xn die Massenbrüche 1, 2, ..., n und Tg(1), Tg(2), ..., Tg(n) die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Erfindungsgemäß bevorzugt wird die Monomercharge M2 so gewählt, dass die theoretische Glasübergangstemperatur (nach Fox) der resultierenden Polymerphase P2 oberhalb der theoretischen Glasübergangstemperatur des zuerst hergestellten Polymeren P1 liegt. Bevorzugt weist dann die Monomercharge M2 eine Zusammensetzung auf, die zu einer theoretischen Glasübergangstemperatur Tg(2) der Polymerphase P2 führt, die oberhalb 30 °C, vorzugsweise oberhalb 40 °C und insbesondere im Bereich von 50 bis 120 °C liegt. Die Monomercharge M1 weist für den Fall, dass Tg(2) größer als Tg(1) ist, vorzugsweise eine Monomerzusammensetzung auf, die zu einer theoretischen Glasübergangstemperatur Tg(1) der resultierenden Polymerphase P1 führt, die im Bereich von -40 bis +40 °C, vorzugsweise im Bereich von -30 bis +30 °C und ganz besonders bevorzugt im Bereich von -10 bis +25 °C liegt. Sofern Tg(1) größer als Tg(2) ist, gilt für die bevorzugten Glasübergangstemperaturen der Polymerphase P1 das zuvor für P2 im Falle von Tg(2) größer Tg(1) gesagte. Für die Glasübergangstemperaturen der Polymerphase P2 gilt dann entsprechend das zuvor für Tg(1) gesagte.

In den erfindungsgemäßen Polymerdispersionen liegt das Gewichtsverhältnis der Polymerphasen zueinander im Bereich von 20 : 1 bis 1 : 20, vorzugsweise 9 : 1 bis 1 : 9. Erfindungsgemäß werden solche Polymerdispersionen bevorzugt, worin der Anteil an Polymerphase mit der niedrigen Glasübergangstemperatur überwiegt. Sofern P1, wie erfindungsgemäß bevorzugt, die niedrigere Glasübergangstemperatur aufweist, liegt das Verhältnis P1 : P2 insbesondere im Bereich von 1 : 1 bis 5 : 1 und besonders bevorzugt im Bereich von 2 : 1 bis 4 : 1. Die Gewichtsverhältnisse der Polymerphasen P1 und P2 entsprechen dabei näherungsweise den Mengenverhältnissen der Monomerchargen M1 und M2. Im Falle von Tg(1) größer Tg(2) liegen die Mengenverhältnisse P1 : P2 insbesondere im Bereich von 1 : 1 bis 1 : 5 und besonders bevorzugt im Bereich von 1 : 2 bis 1 : 4.

Gegenstand der Erfindung ist auch eine Antidröhnmasse, enthaltend

(a) eine oben näher beschriebene Polymerdispersion, enthaltend mindestens ein durch Emulsionspolymerisation von radikalisch polymerisierbaren Monomeren erhältliches, in Wasser dispergiertes Polymer und mindestens ein Schutzkolloid, welches ein amphiphiles Pfropfcopolymer ist; und
(b) anorganische Füllstoffe.

Vorzugsweise enthält die Antidröhnmasse

(a) 5 bis 50 Gew.%, vorzugsweise 5 bis 20 Gew.% Feststoff der Polymerdispersion,
(b) 40 bis 80 Gew.%, vorzugsweise 60 bis 70 Gew.% anorganische Füllstoffe,
(c) 10 bis 40 Gew.%, vorzugsweise 23 bis 28 Gew.% Wasser und
(d) 0 bis 10 oder 0 bis 5 Gew.%, vorzugsweise 0,1 bis 3 Gew.% Hilfsstoffe.

Geeignete anorganische Füllstoffe sind z.B. Calciumcarbonat, Kaolin, Mica, Silica, Kreide, Mikrodolomit, Quarzmehl, Glimmer, Talk, Ton, Bariumsulfat, Tonerde, Eisenoxid, Titandioxid, Glaspulver, Glasschuppen, Magnesiumcarbonat, Aluminiumhydroxid, Bentonit, Flugasche, Kiselguhr und Perlit. Bevorzugt werden schuppenförmige Füllstoffe wie z.B. Mica eingesetzt, allein oder in Kombination mit gewöhnlichen anorganischen Pigmenten wie Calciumcarbonat, Kaolin, Silica oder Talk.

Vorzugsweise werden 50 bis 700 oder 100 bis 550 Gewichtsteile anorganischer Füllstoff auf 100 Gewichtsteile Polymerdispersion eingesetzt, wobei vorzugsweise 30 bis 150 oder 40 bis 120 Gewichtsteile schuppenförmige Füllstoffe auf 100 Gewichtsteile Polymerdispersion eingesetzt werden.

Hilfsstoffe, die vorzugsweise zu mindestens 0,1 Gew.%, z.B. von 0,2 bis 5 Gew.% eingesetzt werden sind z.B. Verdickungsmitteln, Harze, Weichmacher, organische und anorganische Pigmente, Cosolventien, Stabilisatoren, Benetzungmittel, Konservierungsstoffe, Schauminhibitoren, Glas- oder Kunststoffperlen, Glas- oder Kunststoffhohlkörper,

Gefrierschutzmittel, Dispergiermittel, Antioxidantien, UV-Absorber und Antistatika. Von den Hilfsstoffen können eines, zwei oder mehrere in Kombination eingesetzt werden. Geeignete Cosolventien sind z.B. Ethylenglykol, Ethylenglykolalkylether (z.B. Cellosolve®-Typen), Diethylenglykolalkylether (z.B. Carbitol®-Typen), Carbitolacetat, Butylcarbitolacetat oder deren Mischungen. Verdickungsmittel sind z.B. Polyvinylalkohole, Cellulosederivate oder Polyacrylsäuren in Mengen von z.B. 0,01 bis 4 oder von 0,05 bis 1,5 oder von 0,1 bis 1 Gewichtsteilen, bezogen auf 100 Gewichtsteile Feststoff. Dispergiermittel sind z.B. Natriumhexametaphosphat, Natriumtripolyphosphate, oder Polycarbonsäuren. Gefrierschutzmittel sind z.B. Ethylenglykol oder Propylenglykol. Schauminhibitoren sind z.B. Silikone. Stabilisatoren sind z.B. polyvalente Metallverbindungen wie Zinkoxid, Zinkchlorid ode Zinksulfat.

Das Maximum des Verlustfaktors tan delta liegt bei erfindungsgemäßen Antidröhnmassen vorzugsweise im Bereich von -30 bis 60°C. Im Falle der Verwendung von Kern-Schale-Partikeln oder von anderen Partikeln mit mehrphasiger Partikelstruktur, wobei die verschiedenen Polymerphasen unterschiedliche Glasübergangstemperaturen haben, gibt es in der Regel mindestens zwei Maxima des Verlustfaktors bei mindestens zwei verschiedenen Temperaturen. In diesem Fall liegen vorzugsweise alle Maxima des Verlustfaktors im Bereich von -30 bis 60 °C.

Gegenstand der Erfindung ist auch ein Verfahren zur Dämpfung von Vibrationen oder Schwingungen von Bauteilen von Fahrzeugen, wobei

(1) eine oben näher beschriebene Antidröhnmasse mit einem Gehalt an einer erfindungsgemäβen Polymerdispersion zur Verfügung gestellt wird, und
(2) die Antidröhnmasse auf ein Bauteil eines Fahrzeuges aufgebracht und getrocknet wird.

Das Aufbringen kann auf übliche Art erfolgen, z.B. durch Streichen, Rollen oder Sprühen. Die aufgebrachte Menge ist vorzugsweise von 1 bis 7 kg/m$^2$ oder von 2 bis 6 kg/m$^2$ nach Trocknen. Das Trocknen kann bei Umgebungstemperatur oder vorzugsweise durch Anwendung von Wärme erfolgen. Die Trocknungstemperaturen sind vorzugsweise von 80 bis 210°C oder von 90 bis 180 °C oder von 120 bis 170 °C.

Die Antidröhnmasse kann beispielsweise angewendet werden in Fahrzeugen aller Art, insbesondere Straßenkraftfahrzeugen, Automobilen, Schienenfahrzeugen aber auch in Schiffen, Flugzeugen, elektrischen Maschinen, Baumaschinen und Gebäuden.

Die erfindungsgemäß in Antidröhnmassen verwendeten Polymerdispersionen haben gute anwendungstechnische Eigenschaften hinsichtlich guter Auftragbarkeit und guten schwingungsdämpfenden Eigenschaften.

Beispiele

Einsatzstoffe:

| | |
|---|---|
| SK1: | Schutzkolloid 1; Pfropfcopolymer mit einer Hauptkette (40 Gew.-Teile) aus Polyethylenglykol eines mittleren Molekulargewichts von ca. 6000 (berechnet aus der OH-Zahl nach DIN53240) und Seitenketten (60 Gew.-Teile) aus Polyvinylacetat |
| SK2: | Schutzkolloid 2; Pfropfcopolymer mit einer Hauptkette (30 Gew.-Teile) aus Polyethylenglykol eines mittleren Molekulargewichts von ca. 6000 (berechnet aus der OH-Zahl nach DIN53240) und Seitenketten (70 Gew.-Teile) aus Polyvinylacetat |
| SK3: | Schutzkolloid 3; Pfropfcopolymer mit einer Hauptkette (60 Gew.-Teile) aus Polyethylenglykol eines mittleren Molekulargewichts von ca. 6000 (berechnet aus der OH-Zahl nach DIN53240) und Seitenketten (40 Gew.-Teile) aus Polyvinylacetat |
| SK4: | Schutzkolloid 4; Pfropfcopolymer mit einer Hauptkette (80 Gew.-Teile) aus Polyethylenglykol eines mittleren Molekulargewichts von ca. 6000 (berechnet aus der OH-Zahl nach DIN53240) und Seitenketten (20 Gew.-Teile) aus Polyvinylacetat |
| SK5: | Schutzkolloid 5; Sokalan® CP10, 45%ige wässrige Lösung von Natriumpolyacrylat |
| SK6: | Schutzkolloid 6; Acrodur® 950L, formaldehydfreie, wässrige Harzlösung von ca. 50 % Feststoffgehalt aus modifizierter Polyacrylsäure und einem mehrwertigen Alkohol |
| PEG | Polyethylenglykol |
| VAc | Vinylacetat |
| Rongalit ® C | Reduktionsmittel; Sulfinsäurederivat |
| Disponil® FES77 | Fettalkoholethersulfat, Natriumsalz (32-34%ige wässrige Lösung) |
| Dowfax® 2A1 | Alkyldiphenyloxiddisulfonat (45%ige wässrige Lösung) |

Beispiel 1

In einem 2-Liter-Polymerisationsreaktor mit Ankerrührer und Heiz-/Kühleinrichtung wird ein Gemisch aus 180,00 g entionisiertem Wasser und 350g Schutzkolloid SK1 (20%ige Lösung in Wasser) unter Stickstoffatmosphäre auf 90°C erhitzt. Dann wird bei vorgenannter Temperatur eine Teilmenge von 17,59 g von Zulauf 1 und eine Teilmenge von 1,75 g von Zulauf 2 zugegeben. Zulauf 1 ist eine Monomermischung hergestellt aus

| | |
|---|---|
| 1,75 g | tert.-Dodecylmercaptan |
| 84,80 g | n-Butylacrylat |
| 263,45 g | Methylacrylat |

Zulauf 2 ist 17,50 g einer 10 Gew.-%igen wässrigen Lösung von tert-Butylhydroperoxid. Zulauf 3 ist 17,50 g einer 10 Gew.-%igen wässrigen Lösung von Rongalit ® C.

Nach 10 Minuten wird der Rest von Zulauf 1 über 4,0 Stunden gleichmäßig zudosiert. Gleichzeitig wird Zulauf 2 und 3 gestartet und über 4,0 Stunden gleichmäßig zudosiert. Nach Ende von Zulauf1 wird 30 min nachpolymerisiert. Danach werden 12,20 g Wasser zugeben und der pH-Wert auf ph=7 eingestellt.

Beispiel 2

Es wird eine Polymerdispersion hergestellt wie in Beispiel 1 mit dem Unterschied, dass Schutzkolloid SK2 verwendet wird anstelle von Schutzkolloid SK1.

Beispiel 3

Es wird eine Polymerdispersion hergestellt wie in Beispiel 1 mit dem Unterschied, dass Schutzkolloid SK3 verwendet wird anstelle von Schutzkolloid SK1.

Beispiel 4

Es wird eine Polymerdispersion hergestellt wie in Beispiel 1 mit dem Unterschied, dass Schutzkolloid SK4 verwendet wird anstelle von Schutzkolloid SK1.

Beispiel 5 (Vergleich)

Es wird eine Polymerdispersion hergestellt wie in Beispiel 1 mit dem Unterschied, dass 135 g Schutzkolloid SK5 verwendet wird anstelle von Schutzkolloid SK1.

Beispiel 6 (Vergleich)

Es wird eine Polymerdispersion hergestellt wie in Beispiel 1 mit dem Unterschied, dass 225g Schutzkolloid SK6 verwendet wird anstelle von Schutzkolloid SK1.

Beispiel 7 - Schutzkolloidfreie Version (Vergleich)

In einem 2-Liter-Polymerisationsreaktor mit Ankerrührer und Heiz-/Kühleinrichtung werden 115,00 g entionisiertes Wasser unter Stickstoffatmosphäre auf 55 °C erhitzt. Dann wird bei vorgenannter Temperatur eine Teilmenge von 24 g von Zulauf 1 und eine Teilmenge von 1,75 g von Zulauf 2 und Zulauf 3 zugegeben.

Zulauf 1 ist eine Emulsion hergestellt aus

| | |
|---|---|
| 114,00g | entionisiertem Wasser |
| 10,90g | Disponil® FES77 |
| 1,94g | Dowfax® 2A1 |
| 1,75 g | tert.-Dodecylmercaptan |

(fortgesetzt)

| | |
|---|---|
| 1,75 g | Acrylsäure |
| 84,80 g | n-Butylacrylat |
| 263,45 g | Methylacrylat |

Zulauf 2 ist 17,50 g einer 10 Gew.-%igen wässrigen Lösung von Wasserstoffperoxid. Zulauf 3 ist 17,50 g einer 10 Gew.-%igen wässrigen Ascorbinsäurelösung.

Nach 10 Minuten wird der Rest von Zulauf 1 über 4,0 Stunden gleichmäßig zudosiert. Gleichzeitig wird Zulauf 2 und 3 gestartet und über 4,0 Stunden gleichmäßig zudosiert. Nach Ende von Zulauf 1 wird 30 min nachpolymerisiert. Danach werden 12,2 g Wasser zugeben und der pH-Wert mit einer 10 %-igen Natriumhydroxidlösung über 30 Minuten eingestellt.

Beispiele für Antidröhnmassen A1 bis A7

Es werden Antidröhnmassen hergestellt aus

| | |
|---|---|
| 15,41 g | Wasser |
| 21,86 g | Polymerdispersion gemäß Beispielen 1 bis 7 |
| 22,64 g | Muskovitglimmer GHL 144 |
| 45,36 g | Omyacarb® 20 BG (Kreide) |

Anwendungstechnische Prüfungen

Zur Beurteilung des Schwingungsdämpfungsverhaltens wird der Verlustfaktor tan delta bei 25°C gemessen wie in WO 2007/034933 beschrieben (analog ISO 6721-1 und ISO 6721-3). Hierzu wird ein Prüfkörper aus Stahlblech einer Größe von 30 x 300 x 1,6 mm mit der zu testenden Antidröhnmasse beschichtet und getrocknet.

Die Beschichtungsmenge ist ca. 3,0 kg pro $m^2$.

Die Ergebnisse sind in Tabelle 1 aufgeführt.

Tabelle 1: Ergebnisse der Messung des Verlustfaktors tan delta

| Beispiel | PEG/VAc-Verhältnis | Verlustfaktor tan delta |
|---|---|---|
| 1 | 40/60 | 0,20 |
| 2 | 30/70 | 0,20 |
| 3 | 60/40 | 0,18 |
| 4 | 80/20 | 0,16 |
| 5 | - | 0,12 |
| 6 | - | 0,11 |
| 7 | - | 0,15 |

Die Ergebnisse zeigen, dass ein besonders hoher Verlustfaktor mit den Beispielen 1 und 2 erreicht wird und dass mit ionischen Schutzkolloiden, die nicht auf PEG/VAc beruhen, niedrigere Verlustfaktoren erzielt werden.

## Patentansprüche

1. Verwendung einer Polymerdispersion zur Herstellung von Antidröhnmassen, wobei die Polymerdispersion erhältlich ist durch Emulsionspolymerisation von radikalisch polymerisierbaren Monomeren in Gegenwart mindestens eines Schutzkolloids, welches ein amphiphiles Pfropfcopolymer ist.

2. Verwendung nach Anspruch 1, **dadurch gekennzeichnet, dass** das amphiphile Schutzkolloid eine Hauptkette mit wasserlöslichen Polyalkylenoxideinheiten und Seitenketten mit Polyvinylestereinheiten aufweist.

**3.** Verwendung nach Anspruch 2, **dadurch gekennzeichnet, dass** das amphiphile Schutzkolloid einen durchschnittlichen Pfropfungsgrad von mindestens 0,05 Pfropfungsstellen pro 50 Alkylenoxideinheiten aufweist.

**4.** Verwendung nach dem vorherigen Anspruch, **dadurch gekennzeichnet, dass** das Verhältnis von Polyalkylenoxideinheiten zu Vinylestereinheiten von 10/90 bis 80/20, vorzugsweise bis 50/50 beträgt.

**5.** Verwendung nach einem der vorherigen Ansprüche, **dadurch gekennzeichnet, dass** das amphiphile Schutzkolloid

(A) von 10 bis 50 Gew.%, bezogen auf das Gesamtpolymer, an wasserlöslichen Polyalkylenoxiden als Hauptkette und
(B) von 50 bis 90 Gew.%, bezogen auf das Gesamtpolymer, an Seitenketten aufweist,

wobei die Seitenketten gebildet sind durch radikalische Polymerisation von

(B1) 70 bis 100 Gew.%, bezogen die Seitenketten, an Vinylestern, ausgewählt aus Vinylacetat, Vinylpropionat und deren Gemisch und
(B2) 0 bis 30 Gew.%, bezogen die Seitenketten, an weiteren, ethylenisch ungesättigten, radikalisch polymerisierbaren Monomeren.

**6.** Verwendung nach einem der vorherigen Ansprüche, **dadurch gekennzeichnet, dass** das amphiphile Schutzkolloid eine Hauptkette mit Polyethylenoxideinheiten und Seitenketten mit Polyvinylacetateinheiten aufweist.

**7.** Verwendung nach einem der vorherigen Ansprüche, **dadurch gekennzeichnet, dass** die Glasübergangstemperatur des durch Emulsionspolymerisation hergestellten Polymers im Bereich von -60 °C bis kleiner oder gleich 70 °C liegt.

**8.** Verwendung nach einem der vorherigen Ansprüche, **dadurch gekennzeichnet, dass** das durch Emulsionspolymerisation hergestellte Polymer zu mindestens 60 Gew.-% aufgebaut ist aus Hauptmonomeren, welche ausgewählt sind aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

**9.** Verwendung gemäß dem vorhergehenden Anspruch, **dadurch gekennzeichnet, dass** das Polymer zu mindestens 60 Gew. % aus $C_1$ bis $C_{10}$ Alkyl(meth)acrylaten aufgebaut ist.

**10.** Verwendung nach einem der vorherigen Ansprüche **dadurch gekennzeichnet, dass** das Polymer eine Kern-Schale Morphologie aufweist oder durch mindestens zweistufige Polymerisation herstellbar ist, wobei die Glasübergangstemperatur des den Kern bildenden Polymers um mindestens 10°C verschieden ist von der Glasübergangstemperatur des die Schale bildenden Polymers, bzw. wobei die Glasübergangstemperatur des bei der ersten Polymerisationsstufe entstehenden Polymers von der Glasübergangstemperatur des bei der zweiten Polymerisationsstufe entstehenden Polymers um mindestens 10°C verschieden ist.

**11.** Verwendung nach einem der vorherigen Ansprüche zur Schwingungsdämpfung von Karosserieteilen eines Fahrzeugs.

**12.** Antidröhnmasse, enthaltend

(a) eine Polymerdispersion, enthaltend mindestens ein durch Emulsionspolymerisation von radikalisch polymerisierbaren Monomeren erhältliches, in Wasser dispergiertes Polymer und mindestens ein Schutzkolloid, welches ein amphiphiles Pfropfcopolymer ist; und
(b) anorganische Füllstoffe.

**13.** Antidröhnmasse gemäß dem vorhergehenden Anspruch, enthaltend

(a) 5 bis 20 Gew.% Feststoff der Polymerdispersion,
(b) 40 bis 80 Gew.% anorganische Füllstoffe,
(c) 10 bis 40 Gew.% Wasser und
(d) 0 bis 10 Gew.% Hilfsstoffe.

14. Antidröhnmasse nach einem der beiden vorhergehenden Ansprüche, **dadurch gekennzeichnet, dass** die anorganischen Füllstoffe ausgewählt sind aus Kaolin, Kreide, Mikrodolomit, Quarzmehl und Glimmer und die Hilfsstoffe zu mindestens 0,1 Gew.% eingesetzt werden und ausgewählt sind aus Verdickungsmitteln, Harzen, Weichmachern und Dispergiermitteln.

15. Verfahren zur Dämpfung von Vibrationen oder Schwingungen von Bauteilen von Fahrzeugen, wobei

(1) eine Antidröhnmasse mit einem Gehalt an einer Polymerdispersion mit den in den Ansprüchen 1 bis 10 genannten Merkmalen oder eine Antidröhnmasse gemäß den Ansprüchen 12 bis 14 zur Verfügung gestellt wird, und
(2) die Antidröhnmasse auf ein Bauteil eines Fahrzeuges aufgebracht und getrocknet wird.

**Claims**

1. The use of a polymer dispersion for preparing sound deadener compositions, the polymer dispersion being obtainable by emulsion polymerization of free-radically polymerizable monomers in the presence of at least one protective colloid which is an amphiphilic graft copolymer.

2. The use according to claim 1, wherein the amphiphilic protective colloid comprises a main chain having water-soluble polyalkylene oxide units and side chains having polyvinyl ester units.

3. The use according to claim 2, wherein the amphiphilic protective colloid has an average degree of grafting of at least 0.05 graft sites per 50 alkylene oxide units.

4. The use according to the preceding claim, wherein the ratio of polyalkylene oxide units to vinyl ester units is from 10/90 to 80/20, preferably up to 50/50.

5. The use according to any of the preceding claims, wherein the amphiphilic protective colloid comprises

(A) from 10% to 50% by weight, based on the overall polymer, of water-soluble polyalkylene oxides as main chain and
(B) from 50% to 90% by weight, based on the overall polymer, of side chains,

the side chains being formed by free-radical polymerization of

(B1) 70% to 100% by weight, based on the side chains, of vinyl esters selected from vinyl acetate, vinyl propionate, and a mixture thereof, and
(B2) 0% to 30% by weight, based on the side chains, of further, ethylenically unsaturated, free-radically polymerizable monomers.

6. The use according to any of the preceding claims, wherein the amphiphilic protective colloid comprises a main chain having polyethylene oxide units and side chains having polyvinyl acetate units.

7. The use according to any of the preceding claims, wherein the glass transition temperature of the polymer prepared by emulsion polymerization is in the range from -60°C to less than or equal to 70°C.

8. The use according to any of the preceding claims, wherein the polymer prepared by emulsion polymerization is composed of at least 60% by weight of principal monomers selected from C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

9. The use according to the preceding claim, wherein the polymer is composed of at least 60% by weight of $C_1$ to $C_{10}$ alkyl (meth) acrylates.

10. The use according to any of the preceding claims, wherein the polymer has a core-shell morphology or is preparable by at least two-stage polymerization, the glass transition temperature of the core-forming polymer being different

by at least 10°C than the glass transition temperature of the shell-forming polymer, or the glass transition temperature of the polymer formed in the first polymerization stage being different by at least 10°C than the glass transition temperature of the polymer formed in the second polymerization stage.

**11.** The use according to any of the preceding claims for vibration damping of vehicle bodywork parts.

**12.** A sound deadener composition comprising

(a) a polymer dispersion comprising at least one polymer which is obtainable by emulsion polymerization of free-radically polymerizable monomers and is dispersed in water, and at least one protective colloid which is an amphiphilic graft co-polymer, and
(b) inorganic fillers.

**13.** The sound deadener composition according to the preceding claim, comprising

(a) 5% to 20% by weight of solids of the polymer dispersion,
(b) 40% to 80% by weight of inorganic fillers,
(c) 10% to 40% by weight of water, and
(d) 0% to 10% by weight of auxiliaries.

**14.** The sound deadener composition according to either of the two preceding claims, wherein the inorganic fillers are selected from kaolin, chalk, microdolomite, finely ground quartz, and mica, and the auxiliaries are used at not less than 0.1% by weight and are selected from thickeners, resins, plasticizers, and dispersants.

**15.** A method for damping oscillations or vibrations of vehicle components, where

(1) a sound deadener composition comprising a polymer dispersion having the features specified in claims 1 to 10, or a sound deadener composition according to claims 12 to 14, is provided, and
(2) the sound deadener composition is applied to a vehicle component and dried.

**Revendications**

**1.** Utilisation d'une dispersion de polymères pour la préparation de masses anti-grincement, la dispersion de polymères pouvant être obtenue par polymérisation en émulsion de monomères polymérisables par voie radicalaire en présence d'au moins un colloïde de protection, qui est un copolymère greffé amphiphile.

**2.** Utilisation selon la revendication 1, **caractérisée en ce que** le colloïde de protection amphiphile présente une chaîne principale présentant des unités de poly(oxyde d'alkylène) solubles dans l'eau et des chaînes latérales présentant des unités de poly(ester de vinyle).

**3.** Utilisation selon la revendication 2, **caractérisée en ce que** le colloïde de protection amphiphile présente un degré de greffage moyen d'au moins 0,05 site de greffage par 50 unités d'oxyde d'alkylène.

**4.** Utilisation selon la revendication précédente, **caractérisée en ce que** le rapport des unités de poly(oxyde d'alkylène) aux unités d'ester de vinyle vaut 10/90 à 80/20, de préférence jusqu'à 50/50.

**5.** Utilisation selon l'une quelconque des revendications précédentes, **caractérisée en ce que** le colloïde de protection amphiphile présente

(A) 10 à 50% en poids, par rapport au polymère total, de poly(oxydes d'alkylène) solubles dans l'eau comme chaîne principale et
(B) 50 à 90% en poids, par rapport au polymère total, de chaînes latérales, les chaînes latérales étant formées par polymérisation par voie radicalaire de
(B1) 70 à 100% en poids, par rapport aux chaînes latérales, d'esters de vinyle, choisis parmi l'acétate de vinyle, le propionate de vinyle et leur mélange et
(B2) 0 à 30% en poids, par rapport aux chaînes latérales, d'autres monomères éthyléniquement insaturés, polymérisables par voie radicalaire.

6. Utilisation selon l'une quelconque des revendications précédentes, **caractérisée en ce que** le colloïde de protection amphiphile présente une chaîne principale présentant des unités de poly(oxyde d'éthylène) et des chaînes latérales présentant des unités de poly(acétate de vinyle).

7. Utilisation selon l'une quelconque des revendications précédentes, **caractérisée en ce que** la température de transition vitreuse du polymère préparé par polymérisation en émulsion se situe dans la plage de -60°C à moins de ou jusqu'à 70°C.

8. Utilisation selon l'une quelconque des revendications précédentes, **caractérisée en ce que** le polymère préparé par polymérisation en émulsion est constitué à raison d'au moins 60% en poids de monomères principaux qui sont choisis parmi les (méth)acrylates de $C_1$-$C_{20}$-alkyle, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons ou les mélanges de ces monomères.

9. Utilisation selon la revendication précédente, **caractérisée en ce que** le polymère est constitué à raison d'au moins 60% en poids par des (méth)acrylates d'alkyle en $C_1$ à $C_{10}$.

10. Utilisation selon l'une quelconque des revendications précédentes, **caractérisée en ce que** le polymère présente une morphologie à noyau-coquille ou peut être préparé par une polymérisation au moins en deux étapes, la température de transition vitreuse du polymère formant le noyau étant différente d'au moins 10°C de la température de transition vitreuse du polymère formant la coquille ou la température de transition vitreuse du polymère formé lors de la première étape de polymérisation étant différente d'au moins 10°C de la température de transition vitreuse du polymère formé lors de la deuxième étape de polymérisation.

11. Utilisation selon l'une quelconque des revendications précédentes pour l'amortissement des vibrations de pièces de carrosserie d'un véhicule.

12. Masse anti-grincement, contenant

    (a) une dispersion de polymères, contenant au moins un polymère dispersé dans l'eau, pouvant être obtenu par polymérisation en émulsion de monomères polymérisables par voie radicalaire, et au moins un colloïde de protection, qui est un copolymère greffé amphiphile ; et
    (b) des charges inorganiques.

13. Masse anti-grincement selon la revendication précédente, contenant

    (a) 5 à 20% en poids de solides de la dispersion de polymères,
    (b) 40 à 80% en poids de charges inorganiques,
    (c) 10 à 40% en poids d'eau et
    (d) 0% à 10% en poids d'adjuvants.

14. Masse anti-grincement selon l'une quelconque des deux revendications précédentes, **caractérisée en ce que** les charges inorganiques sont choisies parmi le kaolin, la craie, la microdolomite, la farine de quartz et le mica et les adjuvants sont utilisés à raison d'au moins 0,1% en poids et sont choisis parmi les épaississants, les résines, les plastifiants et les dispersants.

15. Procédé pour amortir les vibrations ou les oscillations de pièces de véhicules, où

    (1) une masse anti-grincement présentant une teneur en une dispersion de polymères présentant les caractéristiques mentionnées dans les revendications 1 à 10 ou une masse anti-grincement selon les revendications 12 à 14 est mise à disposition et
    (2) la masse anti-grincement est appliquée sur une pièce d'un véhicule et séchée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20040033354 A
- US 6502821 B
- EP 1520865 A
- WO 2007034933 A
- WO 2007138053 A
- DE 1077430
- GB 922457 A
- EP 81083 A
- DE 19954619


### In der Beschreibung aufgeführte Nicht-Patentliteratur


- *Journal of Materials Science,* 2001, vol. 36, 5733-5737
- **W. MÄCHTLE.** *Makromolekulare Chemie,* 1984, vol. 185, 1025-1039
- Methoden der organischen Chemie. **HOUBEN-WEYL.** Makromolekulare Stoffe. Georg Thieme Verlag, 1961, vol. 14/1, 192-208
- **T.G. FOX.** *Bull. Am. Phys. Soc. (Ser. II,* 1956, vol. 1, 123
- Ullmann’s Enzyklopädie der technischen Chemie. 1980, 17, 18
- Ullmann’s Encyclopedia of Industrial Chemistry. VCH, 1992, vol. A 21, 169
- **J. BRANDRUP ; E.H. IMMERGUT.** Polymer Handbook. J. Wiley, 1989